# EUROPÄISCHE PATENTSCHRIFT

(11) **EP 3 908 377 B1**
(45) Veröffentlichungstag und Bekanntmachung des Hinweises auf die Patenterteilung: **08.03.2023**
(21) Anmeldenummer: 20702066.0
(22) Anmeldetag: 08.01.2020
(51) Int. Cl.: A63B 24/00, G01S 19/19, A63B 69/36

(54) **VERFAHREN UND SYSTEM ZUM GOLFTRAINING**
METHOD AND SYSTEM FOR GOLF TRAINING
PROCÉDÉ ET SYSTÈME D'ENTRAÎNEMENT AU GOLF

(30) Priorität: 08.01.2019 DE 102019100314
(43) Veröffentlichungstag der Anmeldung: 17.11.2021
(73) Patentinhaber: Ai Golf UG (Haftungsbeschränkt), 13505 Berlin (DE)
(72) Erfinder: WASAG, Michael, 14469 Potsdam (DE); FLEMMING, Stefan, 12109 Berlin (DE)
(74) Vertreter: Eisenführ Speiser
(86) Internationale Anmeldenummer: PCT/EP2020/050273
(87) Internationale Veröffentlichungsnummer: WO 2020/144210

(56) Entgegenhaltungen:
- WO-A1-97/01376
- WO-A1-2017/011817
- US-A1- 2009 305 803
- US-A1- 2013 162 467
- US-A1- 2015 094 168

## Beschreibung

Die Erfindung betrifft ein Verfahren sowie eine Vorrichtung zum Golftraining.

Golfspieler benötigen zum Ausbau Ihrer Fähigkeiten Training, dies beinhaltet sowohl das Spielen von Kursen auf Golfplätzen als auch explizite Trainingseinheiten in einer Trainingsanlage. In US 2013/162467 A1 ist ein Verfahren zur Aufnahme und Wiedergabe eines Golfspiels beschrieben. US 2015/094168 A1 beschreibt ein System zur Verfolgung eines Golfballs, WO 2017/011817 A1 allgemein ein System zur Überwachung von Bewegungen. Zur Unterstützung der Motivation des Spielers sind bereits Systeme bekannt, mit denen Golfspieler ihre Schläge elektronisch erfassen und vergleichen können, um über den Wettbewerbsgedanken stärker motiviert zu werden, wie in WO 97/01376 beschrieben. In WO 97/01376 wird hierzu das Grün oder ein Zielgebiet dauerhaft kameraüberwacht und alleine auf Grund der Lage eines Golfballs im Zielgebiet ein Punktwert bestimmt.

Die Berücksichtigung weiterer Einflussfaktoren und Rückschlüsse daraus für eine Unterstützung des Trainingseffektes sind im Stand der Technik nicht möglich.

Hier setzt die Erfindung an, deren Aufgabe es ist, ein Verfahren und ein System zum Golftraining bereitzustellen, mit dem Erlebnis und Effektivität des Golftrainings und des Golfspieles verbessert werden können.

Dies wird gemäß einem ersten Aspekt der Erfindung erreicht durch ein Verfahren zum Golftraining umfassend die Schritte:
- Erfassen einer Schlagposition eines Golfspielers
- Erfassen einer Fahneninformation einer Golffahne umfassend eine Fahnenposition der Golffahne und Informationen zu einem zur Golffahne gehörigen Loch
- Erfassen einer Beschleunigung des Golfspielers oder eines Golfschlägers
- Ausgeben eines zugehörigen Schlagzeitpunktes, wenn ein Maß der erfassten Beschleunigung betragsmäßig über einem vorbestimmten Schwellwert liegt;
- Erfassen einer Umgebung der Golffahne auf einen Empfang des Schlagzeitpunktes hin,
- Prüfen auf das Eintreffen eines Golfballs in der Umgebung;
   - wird ein Golfball in der Umgebung der Golffahne erfasst:
      - Lokalisieren des Golfballs;
      - Ermitteln und Ausgeben einer Lage des Golfballs relativ zur Golffahne nach Erreichen einer Ruheposition;
- Ermitteln und Ausgeben einer Bewertung, insbesondere eines Punktwertes, basierend auf der Fahneninformation, der Schlagposition und der ermittelten Lage anhand eines hinterlegten Bewertungssystems.

Die Erfindung basiert auf der Erkenntnis, dass neben einer Lage des Golfballs am Ende eines Schlages auch weitere Aspekte, wie die Position des Spielers beim Schlag aber auch spezifische Informationen zum Loch oder der Trainingseinheit zu dem die Golffahne gehört berücksichtigt werden müssen, um zum einen eine Vergleichbarkeit von Bewertungen zu schaffen und zum anderen Rückschlüsse für weiteren gezielten Trainingsbedarf schließen zu können. Nur wenn diese weiteren Parameter berücksichtigt werden, ist es möglich anhand der Informationen eine adäquate Bewertung und Beurteilung der Fähigkeiten eines Golfspielers zu ermitteln, die für das weitere Spiel und Training als Grundlage herangezogen werden. Darüber hinaus ermöglicht die Kopplung von Schlagzeitpunkt und Erfassen der Umgebung der Golffahne es, energieeffizient nur dann eine Umgebung der Fahne zu erfassen, wenn tatsächlich ein Spieler am jeweiligen Loch oder der jeweiligen Trainingseinheit spielt und eine solche Überwachung seines Spieles wünscht. Spielen beispielsweise Spieler am Loch, die über keine Sensorik zu Erfassung von Schlagposition und Schlagzeitpunkt verfügen, ist keine Erfassung der Umgebung der Golffahne notwendig.

Unter einer Bewertung werden im Rahmen der Erfindung sowohl Einordnungen anhand einer einzelnen Skala, wie beispielsweise Punktwerte verstanden als auch detailliertere Auswertungen, in denen beispielsweise unterschiedliche Einordnungen zu verschiedenen Aspekten des Golftrainings vorgenommen werden, also beispielsweise verschiedene Skalen für unterschiedliche Aspekte genutzt werden. Neben Punktwerten können die Einordnungen auch beispielsweise Kommentare wie gut, verbesserungswürdig oder ähnliches beinhalten.

Nachfolgend werden vorteilhafte Ausführungsformen des erfindungsgemäßen Verfahrens beschrieben. Die zusätzlichen Merkmale der Ausführungsbeispiele können zur Bildung weiterer Ausführungsformen miteinander kombiniert werden, es sei denn, sie sind in der Beschreibung ausdrücklich als Alternativen zueinander beschrieben.

In einer bevorzugten Ausführungsform umfasst das Verfahren weiter bei jedem Erfassen einer weiteren Beschleunigung, deren Maß über dem vorbestimmten Schwellwert liegt, Ermitteln und Ausgeben einer momentanen Schlagposition und eines weiteren Schlagzeitpunktes, wobei auch die Zahl der weiteren Schlagzeitpunkte und/oder die momentanen Schlagpositionen beim Ermitteln der Bewertung berücksichtigt werden. In dieser Ausführungsform kann somit mitberücksichtigt werden, wie viele Schläge der Golfspieler bis zum Erreichen der Umgebung der Golffahne benötigt hat, sowie in welchen Schritten er sich der Golffahne angenähert hat.

In einer weiteren Ausführungsform umfasst das Verfahren die Schritte:
- Erfassen einer Erschütterung eines an der Fahnenposition angebrachten Behälters zur Aufnahme von Golfbällen
- Ausgeben eines Einlochsignales, das ein Einlochen eines Golfballs anzeigt, bei Erfassen einer Erschütterung, deren Maß betragsmäßig einen vorgegebenen Erschütterungsschwellwert übersteigt.

Dies ermöglicht es ein Einlochen automatisiert zu erfassen. Vorzugsweise wird die Erschütterung über einen Beschleunigungssensor erfasst. In einer Weiterbildung dieser Ausführungsform kann dann die Zahl der weiteren Schlagzeitpunkte bis zum Einlochen beim Ermitteln der Bewertung berücksichtigt werden.

Bevorzugt umfasst die Schlagposition und/oder die momentane Schlagposition eine Ortsinformation und eine Ausrichtungsinformation, wobei die Ortsinformation bevorzugt eine GPS-Information ist. Über Ortsinformation und Ausrichtungsinformation können für die Auswertung des Golfspiels weitere Rückschlüsse für ein optimiertes Training gezogen werden oder die Ausrichtungsinformation kann genutzt werden, um gezielt einen Fahnensensor zu aktivieren, der in einer der Ausrichtung entsprechenden Richtung angeordnet ist.

In einerweiteren Ausführungsform umfasst das Verfahren die Schritte Bestimmen und Ausgeben eines voraussichtlichen Korridors für eine Bewegung des Golfballs und eines Zeitfenster für das Eintreffen des Golfballs in der Umgebung der Golffahne aus der Schlagposition zusammen mit dem Schlagzeitpunkt, mit einer aus der Beschleunigung des Golfspielers oder Golfschlägers bestimmten Geschwindigkeit des Golfballs und/oder mit der Fahnenposition der Golffahne oder aus der momentanen Schlagposition zusammen mit dem weiteren Schlagzeitpunkt, mit der Geschwindigkeit des Golfballs und/oder mit der vorbekannten Fahnenposition. Die Informationen über den voraussichtlichen Korridor ermöglichen in einer Weiterbildung dieser Ausführungsform ein Ausrichten eines an der Golffahne angeordneten optischen Sensors zur Erfassung der Umgebung entsprechend des voraussichtlichen Korridors und des Zeitfensters. Der optische Sensor umfasst dabei vorzugsweise eine Kamera.

Die Fahneninformation der Golffahne umfasst bevorzugt mindestens eine der folgenden Informationen: Informationen zur Bodenbeschaffenheit in der Umgebung der Fahne, Höheninformationen, Schwierigkeitsgrad eines zugehörigen Loches, Wetterparameter, Gefälleinformationen. Über diese Informationen ist eine differenziertere Bewertung des Golftrainings möglich.

Bevorzugt umfasst das Verfahren weiterhin die Schritte
- Erfassen einer jeweils verwendeten Schlägerart;
- Einbeziehen der jeweils verwendeten Schlägerart in das Ermitteln der Bewertung und ermöglicht somit auch die Berücksichtigung der Schlägerwahl bei der Bewertung oder einer anschließenden Auswertung des Golftrainings.

In einer weiteren Ausführungsform umfasst das Verfahren auch Ermitteln und Ausgeben eines Spielerrankings auf Basis erzielter Bewertungen.

Das Ausgeben der Bewertung erfolgt bevorzugt an ein mobiles Endgerät des Golfspielers. Damit kann dieser fortlaufend während des Trainings über die Bewertung informiert werden.

Weiter umfasst das Verfahren in einer Ausführungsform die Schritte:
- Aufnehmen eines Bildes der Umgebung der Golffahne
- Anzeigen des Bildes der Umgebung, insbesondere nach dem Lokalisieren eines Golfballs in der Umgebung, auf einem mobilen Endgerät des Golfspielers und ermöglicht so eine Visualisierung der Situation für den Golfspieler.

Bevorzugt werden zusätzlich die Fahneninformation, die Schlagposition , der Schlagzeitpunkt, die momentanen Schlagpositionen, die weiteren Schlagzeitpunkte und/oder die ermittelte Lage an das mobile Endgerät ausgegeben werden.

In einem Mehrspielermodus umfasst das Verfahren bevorzugt weiter Ausgeben der Fahneninformation, der Schlagposition, der ermittelten Lage, der momentanen Schlagpositionen und der Zahl der Schlagzeitpunkte sowie der Bewertung jedes Golfspielers an Endgeräte weiterer Golfspieler.

In einer weiteren Ausführungsform umfasst das Verfahren die Schritte:
- Bestimmen einer Golfaufgabe basierend auf der erfassten Fahneninformation sowie hinterlegter bereits erzielter Bewertungen des Golfspielers und Ausgeben der Golfaufgabe an ein mobiles Endgerät und/oder
- Bestimmen mindestens eines Spielverbesserungsvorschlages auf Basis der Fahneninformation, der Schlagposition , des Schlagzeitpunktes, der momentanen Schlagpositionen, der weiteren Schlagzeitpunkte der ermittelten Lage, der Bewertung und/oder hinterlegter bereits erzielter Bewertungen und Ausgeben des Spielverbesserungsvorschlages an ein mobiles Endgerät.

Hierüber sind gezielte Verbesserungen des Trainings oder der spielerischen Leistung möglich basierend auf den bei den einzelnen Schlägen gewonnenen Informationen. Eine Golfaufgabe meint dabei beispielsweise eine Aufgabe an den Spieler, Schläge mit bestimmten Schläger oder definierter Weite oder auf bestimmte Ziele auszuführen. Spielverbesserungsvorschläge sind Anweisung, wie das Golfspiel verbessert werden kann, beispielsweise durch andere Körper- oder Schlägerhaltung, veränderte Kraftaufbringung, verändertes Schwungverhalten oder andere Schlägerwahl.

Dabei ist es bevorzugt, wenn zusätzlich in einem Mehrspielermodus die weiteren Schritte Bestimmen mindestens eines Mitspielers basierend auf hinterlegten erzielten Bewertungen von Golfspielern und Ausgeben der Golfaufgabe an Endgeräte des Golfspielers und des mindestens einen Mitspielers erfolgen. Hierüber können Golfspieler im direkten Vergleich in Wettbewerb treten.

In einer weiteren Ausführungsform umfasst das Verfahren projizieren mindestens eines Objektes oder einer Form, wie beispielsweise Zielkreise, Landepunkte, Marker, Gefälle des Greens oder ähnliches, auf das Green. Dabei werden entsprechende Objekte oder Formen bevorzugt zuvor auf Nutzereingaben hin und/oder anhand von erzielten Bewertungen und/oder basierend auf der Fahneninformation ausgewählt. Alternativ oder zusätzlich wird ein Bild des Greens mit dem entsprechenden Objekt und/oder der Form an ein mobiles Endgerät ausgegeben. Dies kann beispielsweise auch Teil einer Golfaufgabe oder eines Spielverbesserungsvorschlages sein.

In einer weiteren Ausbildungsform wird mindestens eine Puttlinie auf das Green projiziert, bevorzugt eine optimale Puttlinie und diese zuvor basierend auf der Fahnenposition und einer Lage des Golfballs bestimmt. Alternativ oder zusätzlich wird die mindestens eine Puttlinie zusammen mit einem Bild des Greens an ein mobiles Endgerät ausgegeben.

Hierüber lässt sich das Golfspiel weiter trainieren und optimieren.

Gemäß einem zweiten Aspekt betrifft die Erfindung ein System zum Golftraining umfassend
- einen Positionssensor, der ausgebildet ist, eine Schlagposition eines Golfspielers zu erfassen und auszugeben;
- einen Beschleunigungssensor, der ausgebildet ist, eine Beschleunigung des Golfspielers oder eines Golfschlägers zu erfassen und auszugeben;
- eine erste Auswerteeinheit, die ausgebildet ist, ein Maß der Beschleunigung aus der erfassten Beschleunigung zu ermitteln und mit einem vorbestimmten Schwellwert zu vergleichen und wenn das Maß der erfassten Beschleunigung betragsmäßig über dem vorbestimmten Schwellwert liegt, die Schlagposition des Golfspielers und einen zugehörigen Schlagzeitpunkt auszugeben,
- einen Fahnensensor, der an oder in unmittelbarerer Umgebung einer Golffahne angeordnet ist und ausgebildet ist, auf den Empfang eines Schlagzeitpunktes hin,
   - eine Umgebung der Golffahne zu erfassen;
   - die Umgebung auf ein Eintreffen eines Golfballs zu prüfen und bei Erfassen eines Golfballs diesen in der Umgebung der Golffahne zu lokalisieren;
   - festzustellen, ob der Golfball eine Ruheposition erreicht hat und nach dem Feststellen der Ruheposition eine Lage des Golfballs relativ zur Golffahne zu ermitteln und auszugeben;
- eine zweite Auswerteeinheit, die ausgebildet ist,
   - die Schlagposition und die ermittelte Lage zu empfangen und
   - eine Bewertung basierend auf einer Fahneninformation der Golffahne umfassend eine Fahnenposition der Golffahne und Informationen zu einem zur Golffahne gehörigen Loch, der Schlagposition und der ermittelten Lage anhand eines hinterlegten Bewertungssystems zu ermitteln und auszugeben.

Hierbei können der erste Positionssensor und der Beschleunigungssensor in einem gemeinsamen Gehäuse verbaut sein. Diese ist bevorzugt ausgebildet, um am Körper des Golfspielers oder am Schläger getragen zu werden.

Bevorzugt umfasst der Fahnensensor eine Fahnensensorsteuereinheit, die ausgebildet ist, auf den Empfang eines Schlagzeitpunktes hin, den Fahnensensor zu aktivieren. In dieser Ausführungsform kann der Fahnensensor in einem Ruhemodus verbleiben, solange kein Schlagzeitpunkt empfangen wurde und damit energieeffizient eingesetzt werden.

In einer Ausführungsform ist die zweite Auswerteeinheit zusätzlich ausgebildet, bei der Ermittlung der Bewertung eine Zahl von Schlagzeitpunkten, momentane Schlagpositionen und/oder verwendete Schlägerarten zu berücksichtigen.

Bevorzugt umfasst der erste Positionssensor einen GPS-Sensor, ein Gyroskop und/oder ein Magnetoskop. Weiter kann der Fahnensensor eine Kamera oder ein Radargerät umfassen.

In einer weiteren Ausführungsform umfasst das System zum Golftraining weiterhin einen Erschütterungssensor, der an einem an der Fahnenposition angebrachten Behälter zur Aufnahme von Golfbällen angebracht ist und ausgebildet ist, eine Erschütterung des Behälters zu erfassen. Über diesen Erschütterungssensor kann ein Einlochen des Golfballs zuverlässig detektiert werden.

Weiterhin ist es vorteilhaft, wenn das System zusätzlich einen Sensor zur Identifizierung von Golfschlägern umfasst, insbesondere einen RFID-Sensor, weiter insbesondere einen NFC-Sensor. Über diesen Sensor können Informationen zum Schläger zur Verfügung gestellt werden und in die Bewertung und Auswertung des Golfspielers miteinfließen.

Es ist vorteilhaft, wenn die zweite Auswerteeinheit weiterhin ausgebildet ist
- eine Golfaufgabe basierend auf der erfassten Fahneninformation sowie hinterlegter bereits erzielter Bewertungen des Golfspielers zu bestimmen und die Golfaufgabe an ein mobiles Endgerät auszugeben und/oder
- mindestens einen Spielverbesserungsvorschlag auf Basis der Fahneninformation, der Schlagposition , des Schlagzeitpunktes, der momentanen Schlagpositionen, der weiteren Schlagzeitpunkte der ermittelten Lage, der Bewertung und/oder hinterlegter bereits erzielter Bewertungen zu bestimmen und an ein mobiles Endgerät auszugeben.

Damit kann das Training des Golfspielers gezielt über die Auswahl der Aufgaben oder der Spielverbesserungsvorschläge optimiert werden.

Die zweite Auswerteeinheit ist bevorzugt in Form eines Computerprogrammproduktes ausgebildet. Auch die erste Auswerteeinheit ist in einer Ausführungsform als Computerprogrammprodukt ausgebildet. Die Computerprogrammprodukte können sowohl auf Servern als auch direkt auf mobilen Endgeräten des Golfspielers gespeichert sein. Die erste und zweite Auswerteeinheit sind in einer Ausführungsform als gemeinsame Auswerteeinheit ausgebildet, die die Funktionen der ersten und der zweiten Auswerteeinheit übernimmt.

In einer weiteren Ausführungsform umfasst das System einen Laser oder einen Projektor, der ausgebildet ist, mindestens ein Objekt oder eine Form, wie beispielsweise Zielkreise, Landepunkte, Marker, Gefälle des Greens oder ähnliches, auf das Green zu projizieren. Der Laser oder Projektor ist dabei mit der zweiten Auswerteeinheit verbunden, die in dieser Ausführungsform ausgebildet ist, auf Nutzereingaben hin und/oder anhand von erzielten Bewertungen und/oder basierend auf der Fahneninformation, entsprechende Objekte oder Formen auszuwählen und ein Signal an den Laser oder Projektor zur Ausgabe des entsprechenden Objektes zu geben. Alternativ oder zusätzlich kann die Auswerteeinheit ausgebildet sein, ein Bild des Greens mit dem entsprechenden Objekt und/oder der Form an ein mobiles Endgerät auszugeben. Dies kann beispielsweise auch Teil einer Golfaufgabe oder eines Spielverbesserungsvorschlages sein.In einer weiteren Ausbildungsform ist der Laser oder Projektor alternativ oder zusätzlich ausgebildet mindestens eine Puttlinie auf dem Green darzustellen, bevorzugt eine optimale Puttlinie und die zweite Auswerteeinheit ist entsprechend ausgebildet, mindestens eine Puttlinie, bevorzugt eine optimale Puttline basierend auf der Fahnenposition und einer Lage des Golfballs zu bestimmen und an den Laser oder Projektor auszugeben. Alternativ oder zusätzlich ist die Auswerteeinheit ausgebildet, die mindestens eine Puttlinie zusammen mit einem Bild des Greens an ein mobiles Endgerät auszugeben.

Hierüber lässt sich das Golfspiel weiter trainieren und optimieren.

Das System teilt im Übrigen die Vorteile und Ausführungsformen des Verfahrens gemäß dem ersten Aspekt der Erfindung.

Ausführungsbeispiele sind auch den Ansprüchen zu entnehmen.

Nachfolgend werden weitere Ausführungsbeispiele anhand der Zeichnung beschrieben. Es zeigen:

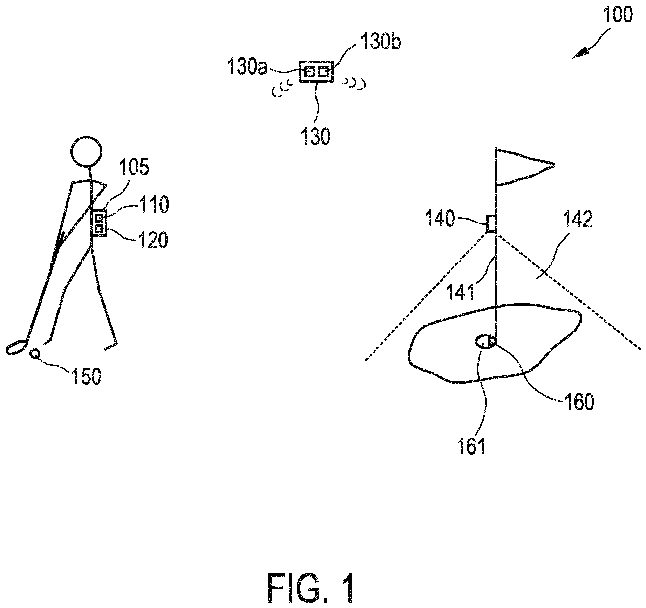

Fig. 1 Eine schematische Darstellung eines Ausführungsbeispiels eines Systems zum Golftraining.

In der in Fig. 1 gezeigten Ausführungsform umfasst das System 100 zum Golftraining einen Positionssensor 110. Der Positionssensor 110 ist ausgebildet, eine Schlagposition eines Golfspielers zu erfassen und auszugeben. Der Positionssensor umfasst in der gezeigten Ausführungsform sowohl einen GPS-Sensor als auch ein Gyroskop, damit kann der Positionssensor eine Schlagposition und/oder die momentane Schlagposition ausgeben, die eine Ortsinformation und eine Ausrichtungsinformation umfasst. Darüber hinaus umfasst das System 100 einen Beschleunigungssensor 120. Dieser ist ausgebildet, eine Beschleunigung des Golfspielers zu erfassen und auszugeben. Der Positionssensor 110 und der Beschleunigungssensor 120 sind hier in einem gemeinsamen Gehäuse 105 angeordnet, das am Körper des Golfspielers getragen wird. Das Gehäuse kann beispielsweise über einen Clip an einem Gürtel des Golfspielers befestigt sein.

Eine erste Auswerteeinheit 130a und eine zweite Auswerteeinheit 130b sind in der gezeigten Ausführungsform als gemeinsame Auswerteeinheit 130 realisiert, die als Computerprogrammprodukt auf einem Server gespeichert ist. In alternativen Ausführungsformen ist eine der Auswerteeinheiten auf einem mobilen Endgerät und die andere auf einem Server gespeichert oder aber beide auf dem mobilen Endgerät. Die erste Auswerteeinheit 130a ist ausgebildet, ein Maß der Beschleunigung aus der erfassten Beschleunigung zu ermitteln und mit einem vorbestimmten Schwellwert zu vergleichen und wenn das Maß der erfassten Beschleunigung betragsmäßig über dem vorbestimmten Schwellwert liegt, die Schlagposition des Golfspielers und einen zugehörigen Schlagzeitpunkt auszugeben. Die Ausgabe erfolgt an einen Fahnensensor 140, der hier an einer Golffahne 141 angeordnet ist. Auf den Empfang des Schlagzeitpunktes hin, erfasst der Fahnensensor 140, der beispielsweise als Kamera ausgebildet sein kann, eine Umgebung 142 der Golffahne 141 und prüft diese auf ein Eintreffen eines Golfballs 150 und, sofern ein Golfball 150 erfasst, lokalisiert er diesen in der Umgebung der Golffahne. Weiterhin ist der Fahnensensor 140 ausgebildet, festzustellen, ob der Golfball 150 eine Ruheposition erreicht hat und nach dem Feststellen der Ruheposition eine Lage des Golfballs relativ zur Golffahne zu ermitteln und auszugeben. Die zweite Auswerteeinheit 130b ist ausgebildet, die Schlagposition und die ermittelte Lage zu empfangen und eine Bewertung basierend auf einer Fahneninformation der Golffahne 141 umfassend eine Fahnenposition der Golffahne und Informationen zu einem zur Golffahne gehörigen Loch, der Schlagposition und der ermittelten Lage anhand eines hinterlegten Bewertungssystems zu ermitteln und auszugeben. Bei jedem Erfassen einer weiteren Beschleunigung durch den Beschleunigungssensor 120, deren Maß über dem vorbestimmten Schwellwert liegt, wird eine momentane Schlagposition und ein weiterer Schlagzeitpunkt ausgegeben. Auch diese werden in die Bewertung mitaufgenommen, so dass auch eine Zahl von Schlägen bis zum Einlochen berücksichtigt werden kann. Das Einlochen selbst wird in der gezeigten Ausführungsform über einen Erschütterungssensor 160 erfasst, der an einem an der Fahnenposition, hier am Loch 161, angebrachten Behälter zur Aufnahme von Golfbällen angebracht ist und ausgebildet ist, eine Erschütterung des Behälters zu erfassen. Die Ausgabe der Bewertung erfolgt dabei bevorzugt an ein mobiles Endgerät des Golfspielers, dem dort neben der Bewertung vorzugsweise auch Bilder der Umgebung, die Fahneninformation, die Schlagposition, der Schlagzeitpunkt, die momentanen Schlagpositionen, die weiteren Schlagzeitpunkte und/oder die ermittelte Lage an das mobile Endgerät ausgegeben werden. Die zweite Auswerteeinheit 130b ist in der gezeigten Ausführungsform weiter ausgebildet, eine Golfaufgabe basierend auf der erfassten Fahneninformation sowie hinterlegter bereits erzielter Bewertungen des Golfspielers zu bestimmen und diese Golfaufgabe an ein mobiles Endgerät auszugeben. Alternativ oder zusätzlich kann sie einen Spielverbesserungsvorschlag auf Basis der Fahneninformation, der Schlagposition, des Schlagzeitpunktes, der momentanen Schlagpositionen, der weiteren Schlagzeitpunkte der ermittelten Lage, der Bewertung und/oder hinterlegter bereits erzielter Bewertungen zu bestimmen und an das mobile Endgerät des Golfspielers ausgeben. Damit werden dem Golfspieler gezielt Übungen oder Verbesserungsvorschläge basierend auf seinen bisherigen Schlägen oder Spielergebnissen an die Hand gegeben, um sein Training zu optimieren.

Daneben kann das System auch für einen Mehrspielermodus ausgerüstet sein. In diesem gibt die zweite Auswerteeinheit 130b Fahneninformation, Schlagposition, ermittelte Lage, momentane Schlagpositionen und die Zahl der Schlagzeitpunkte sowie die Bewertung jedes Golfspielers auch an Endgeräte weiterer Golfspieler aus, die sich so mit einander vergleichen können. Zusätzlich kann die zweite Auswerteeinheit ausgebildet sein, im Mehrspielermodus mindestens einen Mitspieler für den Golfspieler basierend auf hinterlegten erzielten Bewertungen von Golfspielern zu bestimmen und eine Golfaufgabe an Endgeräte des Golfspielers und des mindestens einen Mitspielers auszugeben. Hierüber können Golfspieler im direkten Vergleich in Wettbewerb treten.

## Patentansprüche

1. Verfahren zum Golftraining umfassend die Schritte:
- Erfassen einer Schlagposition eines Golfspielers
- Erfassen einer Fahneninformation einer Golffahne (140) umfassend eine Fahnenposition der Golffahne und Informationen zu einem zur Golffahne gehörigen Loch
- Erfassen einer Beschleunigung des Golfspielers oder eines Golfschlägers
- Ausgeben eines zugehörigen Schlagzeitpunktes, wenn ein Maß der erfassten Beschleunigung betragsmäßig über einem vorbestimmten Schwellwert liegt;
**dadurch gekennzeichnet** durch die folgende Verfahrensschritte:
- Erfassen einer Umgebung der Golffahne (140) auf einen Empfang des Schlagzeitpunktes hin,
- Prüfen auf das Eintreffen eines Golfballs (150) in der Umgebung;
- wird ein Golfball in der Umgebung der Golffahne erfasst:
- Lokalisieren des Golfballs;
- Ermitteln und Ausgeben einer Lage des Golfballs relativ zur Golffahne nach Erreichen einer Ruheposition;
- Ermitteln und Ausgeben einer Bewertung, insbesondere eines Punktwertes, basierend auf der Fahneninformation, der Schlagposition und der ermittelten Lage anhand eines hinterlegten Bewertungssystems.

2. Verfahren nach Anspruch 1 weiter umfassend die Schritte:
- bei jedem Erfassen einer weiteren Beschleunigung, deren Maß über dem vorbestimmten Schwellwert liegt, Ermitteln und Ausgeben einer momentanen Schlagposition und eines weiteren Schlagzeitpunktes;
wobei auch die Zahl der weiteren Schlagzeitpunkte und/oder die momentanen Schlagpositionen beim Ermitteln der Bewertung berücksichtigt werden.

3. Verfahren nach Anspruch 1 oder 2 weiter umfassend die Schritte:
- Erfassen einer Erschütterung eines an der Fahnenposition angebrachten Behälters zur Aufnahme von Golfbällen
- Ausgeben eines Einlochsignales, das ein Einlochen eines Golfballs anzeigt, bei Erfassen einer Erschütterung, deren Maß betragsmäßig einen vorgegebenen Erschütterungsschwellwert übersteigt, wobei insbesondere die Zahl der weiteren Schlagzeitpunkte bis zum Einlochen beim Ermitteln der Bewertung berücksichtigt wird.

4. Verfahren nach einem der vorstehenden Ansprüche zusätzlich umfassend die Schritte:
- Bestimmen und Ausgeben eines voraussichtlichen Korridors für eine Bewegung des Golfballs und eines Zeitfenster für das Eintreffen des Golfballs in der Umgebung der Golffahne aus der Schlagposition zusammen mit dem Schlagzeitpunkt, mit einer aus der Beschleunigung des Golfspielers oder Golfschlägers bestimmten Geschwindigkeit des Golfballs und/oder mit der Fahnenposition der Golffahne oder aus der momentanen Schlagposition zusammen mit dem weiteren Schlagzeitpunkt, mit der Geschwindigkeit des Golfballs und/oder mit der vorbekannten Fahnenposition.

5. Verfahren nach Anspruch 4 weiter umfassend den Schritt:
- Ausrichten eines an der Golffahne angeordneten optischen Sensors zur Erfassung der Umgebung entsprechend des voraussichtlichen Korridors und des Zeitfensters.

6. Verfahren nach einem der vorstehenden Ansprüche, bei dem die Fahneninformation der Golffahne mindestens eine der folgenden Informationen umfasst: Informationen zur Bodenbeschaffenheit in der Umgebung der Fahne, Höheninformationen, Schwierigkeitsgrad eines zugehörigen Loches, Wetterparameter, Gefälleinformationen und/oder bei dem die Schlagposition und/oder die momentane Schlagposition eine Ortsinformation und eine Ausrichtungsinformation umfasst und/oder bei dem das Ausgeben der Bewertung an ein mobiles Endgerät des Golfspielers erfolgt.

7. Verfahren nach einem der vorstehenden Ansprüche weiter umfassend die Schritte
- Erfassen einer jeweils verwendeten Schlägerart;
- Einbeziehen der jeweils verwendeten Schlägerart in das Ermitteln der Bewertung und/oder weiter umfassend den Schritt:
- Ermitteln und Ausgeben eines Spielerrankings auf Basis erzielter Bewertungen.

8. Verfahren nach einem der vorstehenden Ansprüche weiter umfassend die Schritte:
- Aufnehmen eines Bildes der Umgebung der Golffahne
- Anzeigen des Bildes der Umgebung, insbesondere nach dem Lokalisieren eines Golfballs in der Umgebung auf einem mobilen Endgerät des Golfspielers.

9. Verfahren nach einem der vorstehenden Ansprüche weiter umfassend den Schritt
- in einem Mehrspielermodus Ausgeben der Fahneninformation, der Schlagposition, der ermittelten Lage, der momentanen Schlagpositionen und der Zahl der Schlagzeitpunkte sowie der Bewertung jedes Golfspielers an Endgeräte weiterer Golfspieler.

10. Verfahren nach einem der vorstehenden Ansprüche weiter umfassend die Schritte:
- Bestimmen einer Golfaufgabe basierend auf der erfassten Fahneninformation sowie hinterlegter bereits erzielter Bewertungen des Golfspielers und Ausgeben der Golfaufgabe an ein mobiles Endgerät und/oder
- Bestimmen mindestens eines Spielverbesserungsvorschlages auf Basis der Fahneninformation, der Schlagposition des Schlagzeitpunktes, der momentanen Schlagpositionen, der weiteren Schlagzeitpunkte der ermittelten Lage, der Bewertung und/oder hinterlegter bereits erzielter Bewertungen und Ausgeben des Spielverbesserungsvorschlages an ein mobiles Endgerät.

11. Verfahren nach Anspruch 10 weiter umfassend die Schritte:
- in einem Mehrspielermodus Bestimmen eines Mitspielers basierend auf hinterlegten erzielten Bewertungen von Golfspielern;
- Ausgeben der Golfaufgabe an Endgeräte von mindestens zwei Golfspielern.

12. System (100) zum Golftraining umfassend
- einen Positionssensor (110), der ausgebildet ist, eine Schlagposition eines Golfspielers zu erfassen und auszugeben;
- einen Beschleunigungssensor (120), der ausgebildet ist, eine Beschleunigung des Golfspielers oder eines Golfschlägers zu erfassen und auszugeben;
- eine erste Auswerteeinheit (130a), die ausgebildet ist, ein Maß der Beschleunigung aus der erfassten Beschleunigung zu ermitteln und mit einem vorbestimmten Schwellwert zu vergleichen und wenn das Maß der erfassten Beschleunigung betragsmäßig über dem vorbestimmten Schwellwert liegt, die Schlagposition des Golfspielers und einen zugehörigen Schlagzeitpunkt auszugeben,
dadurch**gekennzeichnet durch**
- einen Fahnensensor (140), der an oder in unmittelbarerer Umgebung einer Golffahne angeordnet ist und ausgebildet ist, auf den Empfang eines Schlagzeitpunktes hin
- eine Umgebung (142) der Golffahne (141) zu erfassen;
- die Umgebung auf ein Eintreffen eines Golfballs (150) zu prüfen und bei Erfassen eines Golfballs diesen in der Umgebung der Golffahne zu lokalisieren;
- festzustellen, ob der Golfball eine Ruheposition erreicht hat und nach dem Feststellen der Ruheposition eine Lage des Golfballs relativ zur Golffahne zu ermitteln und auszugeben;
- eine zweite Auswerteeinheit (130b), die ausgebildet ist,
- die Schlagposition und die ermittelte Lage zu empfangen und
- eine Bewertung basierend auf einer Fahneninformation der Golffahne umfassend eine Fahnenposition der Golffahne und Informationen zu einem zur Golffahne gehörigen Loch, der Schlagposition und der ermittelten Lage anhand eines hinterlegten Bewertungssystems zu ermitteln und auszugeben.

13. System (100) zum Golftraining nach Anspruch 12 weiterhin umfassend einen Erschütterungssensor (160), der an einem an der Fahnenposition angebrachten Behälter zur Aufnahme von Golfbällen angebracht ist und ausgebildet ist, eine Erschütterung des Behälters zu erfassen und/oder zusätzlich umfassend einen Sensor zur Identifizierung von Golfschlägern, insbesondere einen RFID-Sensor, weiter insbesondere einen NFC-Sensor.

14. System (100) zum Golftraining nach einem der Ansprüche 12 oder 13, bei dem die zweite Auswerteeinheit weiterhin ausgebildet ist
- eine Golfaufgabe basierend auf der erfassten Fahneninformation sowie hinterlegter bereits erzielter Bewertungen des Golfspielers zu bestimmen und die Golfaufgabe an ein mobiles Endgerät auszugeben und/oder
- mindestens einen Spielverbesserungsvorschlag auf Basis der Fahneninformation, der Schlagposition des Schlagzeitpunktes, der momentanen Schlagpositionen, der weiteren Schlagzeitpunkte der ermittelten Lage, der Bewertung und/oder hinterlegter bereits erzielter Bewertungen zu bestimmen und an ein mobiles Endgerät auszugeben.

15. System (100) zum Golftraining nach einem der Ansprüche 12 bis 14, bei dem die zweite Auswerteeinheit (130b) in Form eines Computerprogrammproduktes ausgebildet ist.

## Claims

1. Method for golf training, comprising the following steps:
- capturing a golfer's stroke position
- capturing flag information of a golf flag (140) comprising a flag position of the golf flag and information relating to a hole belonging to the golf flag
- capturing an acceleration of the golfer or of a golf club
- outputting an associated stroke timepoint, if a magnitude of the captured acceleration exceeds a specified threshold value;
**characterised by** the following steps:
- capturing the surrounding area of the golf flag (140) upon receipt of the stroke timepoint,
- checking for the arrival of a golf ball (150) in the surrounding area;
- if a golf ball is captured in the surrounding area of the golf flag:
- locating the golf ball;
- determining and outputting a location of the golf ball relative to the golf flag once it has reached a rest position;
- determining and outputting an assessment, in particular a point value, based on the flag information, the stroke position and the determined location, using a stored assessment system.

2. Method according to claim 1, further comprising the following steps:
- whenever a further acceleration, the magnitude of which exceeds the specified threshold value, is captured, determining and outputting a current stroke position and a further stroke timepoint;
the number of the further stroke timepoints and/or the current stroke positions being taken into account in the determination of the assessment.

3. Method according to claim 1 or 2, further comprising the following steps:
- capturing a vibration of a container for holding golf balls installed at the flag position
- outputting a hole-out signal indicating hole-out of a golf ball upon capture of a vibration whose magnitude exceeds a predetermined vibration threshold value, wherein in particular the number of further stroke timepoints up to the hole-out is taken into account in the determination of the assessment.

4. Method according to any one of the preceding claims additionally comprising the following steps:
- identifying and outputting an anticipated corridor for a movement of the golf ball and a time window for the arrival of the golf ball in the surrounding area of the golf flag from the stroke position together with the stroke timepoint, with a speed of the golf ball determined from the acceleration of the golfer or golf club and/or with the flag position of the golf flag or from the current stroke position together with the further stroke timepoint, with the speed of the golf ball and/or with the previously known flag position.

5. Method according to claim 4, further comprising the following step:
- aligning an optical sensor located on the golf flag to capture the surrounding area according to the anticipated corridor and the time window.

6. Method according to any one of the preceding claims, wherein the golf flag information comprises at least one of the following items of information: information on the ground conditions in the surrounding area of the flag, altitude information, degree of difficulty of an associated hole, weather parameters, slope information and/or in which the stroke position and/or the current stroke position comprises location information and alignment information and/or in which the output of the assessment takes place to a mobile device of the golfer.

7. Method according to any one of the preceding claims, further comprising the following steps:
- capturing a respective type of club used;
- incorporating the respective type of club used in the determination of the assessment and/or further comprising the following step:
- determining and outputting a player ranking based on the assessments obtained.

8. Method according to any one of the preceding claims, further comprising the following steps:
- taking an image of the surrounding area of the golf flag
- displaying the image of the surrounding area on a mobile device of the golfer, in particular after locating a golf ball in the surrounding area.

9. Method according to any one of the preceding claims, further comprising the following step:
- in a multi-player mode, outputting the flag information, the stroke position, the determined location, the current stroke positions and the number of stroke timepoints as well as the assessment of each golfer to devices of other golfers.

10. Method according to any one of the preceding claims, further comprising the following steps:
- identifying a golf task based on the captured flag information and stored assessments already achieved by the golfer and outputting the golf task to a mobile device and/or
- identifying at least one game improvement suggestion based on the flag information, the stroke position of the stroke timepoint, the current stroke positions, the further stroke timepoints the determined location, the assessment and/or stored assessments already achieved and outputting the game improvement suggestion to a mobile device.

11. Method according to claim 10, further comprising the following steps:
- in a multiplayer mode, identifying a fellow player based on stored assessments achieved by golfers;
- outputting the golf task to devices of at least two golfers.

12. System (100) for golf training, comprising
- a position sensor (110) configured to capture and output a stroke position of a golfer;
- an acceleration sensor (120) configured to capture and output an acceleration of the golfer or a golf club;
- a first evaluation unit (130a) which is configured to determine a magnitude of the acceleration from the captured acceleration and to compare it with a specified threshold value and, if the magnitude of the captured acceleration exceeds the specified threshold value, to output the stroke position of the golfer and an associated stroke timepoint,
**characterised by**
- a flag sensor (140) located at or in the immediate surrounding area of a golf flag and configured, upon receipt of a stroke timepoint
- to capture a surrounding area (142) of the golf flag (141);
- to check the surrounding area for the arrival of a golf ball (150) and, if a golf ball is captured, to locate it in the surrounding area of the golf flag;
- to establish whether the golf ball has reached a rest position and, after establishing the rest position, to determine and output a location of the golf ball relative to the golf flag;
- a second evaluation unit (130b), which is configured,
- to receive the stroke position and the determined position and
- to determine and output an assessment based on flag information of the golf flag comprising a flag position of the golf flag and information on a hole belonging to the golf flag, the stroke position and the determined location based on a stored assessment system.

13. System (100) for golf training according to claim 12 further comprising a vibration sensor (160), which is attached to a container for receiving golf balls installed at the flag position and is configured to capture a vibration of the container and/or additionally comprising a sensor for identifying golf clubs, in particular an RFID sensor, further in particular an NFC sensor.

14. System (100) for golf training according to any one of claims 12 or 13, wherein the second evaluation unit is further configured
- to identify a golf task based on the captured flag information and stored assessments already achieved by the golfer and to output the golf task to a mobile device and/or
- to identify and to output to a mobile device at least one game improvement suggestion on the basis of the flag information, the stroke position of the stroke timepoint, the current stroke positions, the further stroke timepoints the determined location, the assessment and/or stored assessments already achieved.

15. System (100) for golf training according to any one of claims 12 to 14, in which the second evaluation unit (130b) is in the form of a computer program product.

## Revendications

1. Procédé d'entraînement au golf comprenant les étapes consistant à :
- détecter une position de frappe d'un golfeur
- détecter des informations de drapeau d'un drapeau de golf (140) comprenant une position de drapeau du drapeau de golf et des informations concernant un trou correspondant au drapeau de golf
- détecter une accélération du golfeur ou d'un club de golf
- délivrer un temps de frappe associé lorsqu'une mesure de la quantité d'accélération détectée est supérieure à une valeur seuil prédéterminée ;
**caractérisé par** les étapes de procédé suivantes consistant à :
- détecter l'environnement du drapeau de golf (140) lors de la réception de l'instant de frappe,
- vérifier l'arrivée d'une balle de golf (150) dans la zone ;
- si une balle de golf est détectée à proximité du drapeau de golf les étapes consistant à :
- localiser la balle de golf ;
- déterminer et délivrer une position de la balle de golf par rapport au drapeau de golf après avoir atteint une position de repos ;
- déterminer et délivrer une évaluation, en particulier une valeur de points, sur la base des informations de drapeau, de la position de frappe et de l'emplacement déterminé à l'aide d'un système d'évaluation stocké en mémoire.

2. Procédé selon la revendication 1 comprenant en outre les étapes consistant à :
chaque fois qu'une accélération supplémentaire est détectée, dont la valeur est supérieure à la valeur de seuil prédéterminée, déterminer et délivrer une position de frappe actuelle et un autre instant de frappe ;
dans lequel le nombre d'instants de frappe supplémentaires et/ou les positions actuelles de frappe sont également pris en compte lors de la détermination de l'évaluation.

3. Procédé selon la revendication 1 ou 2 comprenant en outre les étapes consistant à :
- détecter la vibration d'un récipient destiné à recevoir des balles de golf fixé au niveau de la position du drapeau ;
- délivrer un signal « balle dans le trou » qui indique qu'une balle est rentrée dans le trou lors de la détection d'une vibration, dont l'amplitude dépasse une valeur de seuil de vibration prédéterminée, dans lequel en particulier le nombre d'instants de frappe supplémentaires jusqu'à ce que la balle soit rentrée dans le trou est pris en compte lors de la détermination de l'évaluation.

4. Procédé selon l'une quelconque des revendications précédentes comprenant en outre les étapes consistant à :
- déterminer et sortir un couloir prévu pour un mouvement de la balle de golf et une fenêtre temporelle pour l'arrivée de la balle de golf à proximité du drapeau de golf à partir de la position de frappe conjointement avec le temps de frappe, avec une vitesse de balle de golf déterminée à partir de l'accélération du golfeur ou du club de golf et/ou avec la position du drapeau du golf drapeau ou à partir de la position actuelle du frappe avec l'instant de frappe ultérieur, avec la vitesse de la balle de golf et/ou avec la position du drapeau précédemment connue.

5. Procédé selon la revendication 4 comprenant en outre l'étape consistant à:
- aligner un capteur optique situé sur le drapeau de golf pour détecter l'environnement en fonction du couloir probable et de la fenêtre temporelle.

6. Procédé selon l'une quelconque des revendications précédentes, dans lequel les informations de drapeau du drapeau de golf comprennent au moins l'une des informations suivantes : information sur la nature du sol au voisinage du drapeau, information de hauteur, difficulté d'un trou associé, paramètres météorologiques, informations d'inclinaison, et/ou dans lequel la position de frappe et/ou la position de frappe actuelle comprend des informations de localisation et des informations d'orientation et/ou dans lequel l'évaluation est délivrée à un terminal mobile du golfeur.

7. Procédé selon l'une quelconque des revendications précédentes comprenant en outre les étapes consistant à :
- détecter un type de club utilisé dans chaque cas ;
- incorporer le type de club respectif utilisé lors de la détermination de l'évaluation, et/ou comprenant en outre l'étape consistant à :
- déterminer et délivrer un classement de joueur en fonction des évaluations obtenues.

8. Procédé selon l'une quelconque des revendications précédentes comprenant en outre les étapes consistant à :
- capturer une image de l'environnement du drapeau de golf
- afficher l'image de l'environnement, notamment après localisation d'une balle de golf dans l'environnement, sur le terminal mobile d'un golfeur.

9. Procédé selon l'une quelconque des revendications précédentes comprenant en outre l'étape consistant à :
- en mode multij oueur, sortir des informations de drapeau, la position de frappe, l'emplacement déterminée, les positions de frappe actuelles et le nombre de temps de frappe et l'évaluation de chaque golfeur aux terminaux d'autres golfeurs.

10. Procédé selon l'une quelconque des revendications précédentes comprenant en outre les étapes consistant à :
- déterminer une tâche de golf sur la base des informations de drapeau détectées et des évaluations en mémoire déjà obtenues du golfeur et délivrer la tâche de golf sur un terminal mobile, et/ou
- déterminer au moins une suggestion d'amélioration de jeu basée sur les informations du drapeau, la position de frappe, le moment de frappe, les positions de frappe actuelles, les autres temps de frappe pour l'emplacement déterminé, l'évaluation et/ou les évaluations stockées en mémoire déjà obtenues, et fournir la suggestion d'amélioration de jeu à un terminal mobile.

11. Procédé selon la revendication 10 comprenant en outre les étapes consistant à :
- en mode multijoueur, déterminer un autre joueur à partir des évaluations enregistrées obtenues pour les golfeurs ;
- délivrer la tâche de golf aux terminaux d'au moins deux golfeurs.

12. Système (100) d'entraînement au golf comprenant
- un capteur de position (110) qui est conçu pour détecter et délivrer une position de frappe d'un golfeur ;
- un capteur d'accélération (120) qui est conçu pour détecter et délivrer une accélération du golfeur ou d'un club de golf ;
- une première unité d'évaluation (130a), qui est conçue pour déterminer une mesure de l'accélération à partir de l'accélération détectée et pour la comparer à une valeur de seuil prédéterminée et si la mesure de l'accélération détectée est supérieure à la valeur de seuil prédéterminée en termes de sa valeur, pour délivrer la position de frappe du golfeur et un temps de frappe associé,
**caractérisé par**
- un capteur de drapeau (140), qui est disposé sur un drapeau de golf ou à proximité immédiate de celui-ci et est conçu, à partir de la réception d'un instant de frappe, pour
- capturer un environnement (142) du drapeau de golf (141) ;
- vérifier l'environnement pour l'arrivée d'une balle de golf (150) et lorsqu'une balle de golf est détectée, localiser celle-ci à proximité du drapeau de golf ;
- déterminer si la balle de golf a atteint une position de repos et, après avoir déterminé la position de repos, déterminer et sortir une position de la balle de golf par rapport au drapeau de golf ;
- une deuxième unité d'évaluation (130b), qui est conçue pour :
- recevoir la position de frappe et la position déterminée, et
- déterminer et sortir une évaluation basée sur des informations de drapeau de golf comprenant une position de drapeau du drapeau de golf et des informations sur un trou qui correspond au drapeau de golf, la position de frappe et l'emplacement déterminé à l'aide d'un système d'évaluation stocké en mémoire.

13. Système (100) pour l'entraînement au golf selon la revendication 12, comprenant en outre un capteur de vibration (160) fixé à un récipient de réception de balle de golf monté à la position du drapeau et configuré pour détecter la vibration du récipient et/ou comprenant en outre un capteur pour l'identification de clubs de golf, notamment un capteur RFID, plus particulièrement un capteur NFC.

14. Système (100) d'entraînement au golf selon l'une des revendications 12 ou 13, dans lequel la deuxième unité d'évaluation est encore conçue pour :
- déterminer une tâche de golf sur la base des informations de drapeau obtenues et des évaluations stockées du golfeur qui ont déjà été réalisées et pour sortir la tâche de golf sur un terminal mobile et/ou
- déterminer au moins une suggestion d'amélioration de jeu sur la base des informations du drapeau, de la position de frappe, du moment de frappe, des positions de frappe actuelles, des autres temps de frappe, de l'emplacement déterminé, de l'évaluation et/ou des évaluations stockées déjà obtenues et pour les sortir sur un appareil mobile.

15. Système (100) d'entraînement au golf selon l'une des revendications 12 à 14, dans lequel la deuxième unité d'évaluation (130b) est conçue sous la forme d'un produit formant programme d'ordinateur.
